# EUROPEAN PATENT APPLICATION

(11) **EP 3 412 557 A1**
(43) Date of publication of application: **12.12.2018**
(21) Application number: 18172613.4
(22) Date of filing: 16.05.2018
(51) Int. Cl.: B63J 4/00, C02F 1/04

(54) **APPLICATION OF DISTILLED WATER, GENERATION SYSTEM AND FACILITY UTILIZING DISTILLED WATER AS BALLAST WATER, VESSEL INCLUDING THE GENERATION SYSTEM AND OPERATION METHOD THEREOF**

(30) Priority: 07.06.2017 TW 106118926; 19.12.2017 TW 106144504
(71) Applicant: Lu, Kun-Tu, Kaohsiung City (TW)
(72) Inventor: LU, Kun-Tu, 800 Xinxing Dist., Kaohsiung City (TW); LUI, Hon-Kit, Hong Kong (HK); CHEN, Chen-Tung Arthur, 804 Kaohsiung City (TW); LIU, Li-Lian, 804 Gushan Dist., Kaohsiung City (TW)
(74) Representative: Viering, Jentschura & Partner mbB Patent- und Rechtsanwälte

(57) **Abstract**

An application of distilled water, a generation system and a facility utilizing distilled water as ballast water of a vessel (100), a vessel (100) including the generation system and an operation method thereof are disclosed. The vessel (100) includes a ship body (110) and a generation system which includes a pumping device (10), a distilled water generator (20) and a ballast water tank (30). The operation method includes pumping water by the pumping device (10) from a sailing area of the vessel (100); distillation of the water pumped by the pumping device (10) with the distilled water generator (20) to form distilled water, and supplying the distilled water to the ballast water tank (30) as the ballast water so as to adjust a draft and stability of the ship body (110). The facility includes a distilled water storage device (310) adapted to store distilled water which could be applied to a ballast water tank (30) of a vessel (100) as ballast water.

## Description

### BACKGROUND OF THE INVENTION

### 1. Technical Field

The present invention is related to vessel and ballast water, and more particularly to an application of distilled water, a generation system and a facility which utilize distilled water as ballast water of a vessel, a vessel including the generation system and an operation method thereof.

### 2. Description of Related Art

To maintain balance of a vessel, it usually requires to load a predetermined amount of ballast water into a ballast water tank disposed on a ship body of the vessel to adjust a draft and a center of gravity of the ship body so as to maintain the vessel in longitudinal and horizontal balance, and to ensure the safety and the stability of the vessel during its sailing process. Besides, in order to keep the power system of the vessel operating at a good propulsive efficiency, it usually requires to adjust a draft of the propeller of the vessel to minimize the vibration of the ship body which is induced by the tail wave of the vessel.

Conventional vessels usually pump water from the local water area or the sailing area into its ballast water tank. During this process, the vessels take in the ballast water which includes aquatic creatures, such as fishes, invertebrates, plants (including aquatic and amphibians), zooplankton, phytoplankton, algae, bacteria, viruses, microbes, and even eggs, spores, seeds of these species, etc., and in water or dissolved in water-related substances, such as contaminants or heavy metals into the ballast water tank, and then discharge the ballast water until the vessels reach their destination. Meanwhile, the living organisms contained in the ballast water would be also discharged into the surrounding waters of the destination and result in ecological or environmental problems, such as (1) invasion of aquatic creatures, i.e., exotic species, into local aquatic area, and result in threat or destruction to the local ecosystem; (2) spreading bacteria or virus together with the discharge of ballast water from one aquatic area to other aquatic area, and leads to a possible breakout of large-scale infectious diseases. With the development of global shipping business, billions of tonnes of ballast water are transported by the ocean vessels all over the world every year. It is strongly believed that the above problems are growing worse day by day.

Hence, in order to control and prevent exotic aquatic creatures from affecting local ecosystem or environment, as well as to control and prevent spreading of microbes, such as bacteria or virus, together with the discharge of the ballast water of the vessel, International Maritime Organization (IMO) had issued "International Convention for the Control and Management of Ship's Ballast Water and Sediments" in 2004. The goal of the convention is to prevent and reduce, even to eliminate, the above problems to ecosystems, environment, and human health through the management and control on the discharge of the ballast water and the sediments of the vessel.

Wherein, in order to prevent the invasion of exotic organisms, some methods are utilized to remove the aquatic creatures from the ballast water, such as a filter treatment to filter out the aquatic creatures and the bacteria, a chemical treatment to kill the aquatic creatures and the bacteria, or UV irradiation, deoxidation, and ultrasonic oscillation to eliminate the aquatic creatures and the bacteria. However, the above methods cannot fully remove or kill all kinds of aquatic creatures contained in the ballast water. Besides, some methods, such as the chemical treatment, even are harmful to the environment. Additionally, it is inconvenient to set up the related ballast water treatment system and the cost thereof is also expensive. Therefore, it still needs a solution to overcome the problems mentioned above.

### BRIEF SUMMARY OF THE INVENTION

In view of the above, the present invention is to provide an application for distilled water, a generation system and a facility which utilize distilled water as ballast water of a vessel, a vessel including the generation system and an operation method thereof which can avoid and prevent the above problems in the conventional arts, and is convenient for use and friendly to the environment. In addition, as compared with other ballast water treatment system, a cost of the generation system of the present invention is lower, and corrosion to the ballast water tank is significantly minimized as well.

The present invention provides a generation system which utilizes distilled water as ballast water of a vessel. The generation system is mounted on a ship body of the vessel and includes a pumping device, adapted to pump water from a sailing area of the vessel; a distilled water generator, connected with the pumping device, and adapted to receive the water pumped by the pumping device and distill the water to form distilled water, and a ballast water tank, connected with the distilled water generator, and adapted to receive the distilled water as the ballast water to adjust a draft and stability of the ship body.

The present invention also provides a vessel, which includes a ship body, and a ballast water tank, disposed in the ship body and connected with the distilled water generator, being adapted to receive the distilled water as ballast water so as to adjust a draft and stability of the ship body.

The present invention further provides an operation method for a vessel which utilizes a generation system having distilled water as ballast water of the vessel. Wherein, the vessel includes a ship body, and the generation system disposed on the ship body. The generation system includes a pumping device, a distilled water generator, and a ballast water tank. The operation method includes pumping water by the pumping device from a sailing area of the vessel; distillation of the water pumped by the pumping device with the distilled water generator to form distilled water, and supplying the distilled water formed by the distilled water generator into the ballast water tank as the ballast water so as to adjust a draft and stability of the ship body.

The present invention provides an application of distilled water which utilizes the distilled water as ballast water of a vessel so as to adjust a draft and stability of the ship body.

The present invention provides a facility which provides distilled water as ballast water to a vessel. The facility includes a distilled water storage device adapted to store distilled water which is to be supplied to a ballast water tank of the vessel as ballast water so as to adjust a draft and stability of the ship body.

The advantage of the present invention is that the ballast water of the vessel is generated by distillation of the pumped water with the distilled water generator. It not only can adjust a draft and stability of the ship body, but also can effectively avoid the problems to the ecosystems, environment and human health which are mentioned in the related art.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a schematic view of a vessel of an embodiment according to the present invention;
FIG. 2 is a flow chart of an operation method of the embodiment according to the present invention;
FIG. 3A and FIG. 3B illustrate a relationship between a fuel consumption of the vessel and a water production quantity according to an embodiment of the present invention;
FIG. 4 is a schematic view of a vessel of another embodiment according to the present invention;
FIG. 5 is a schematic view of a facility of an embodiment according to the present invention which could provide distilled water to a vessel as ballast water; and
FIG. 6 is a schematic view showing that distilled water is supplied to or unloaded from the ballast water tank of a vessel.

### DETAILED DESCRIPTION OF THE INVENTION

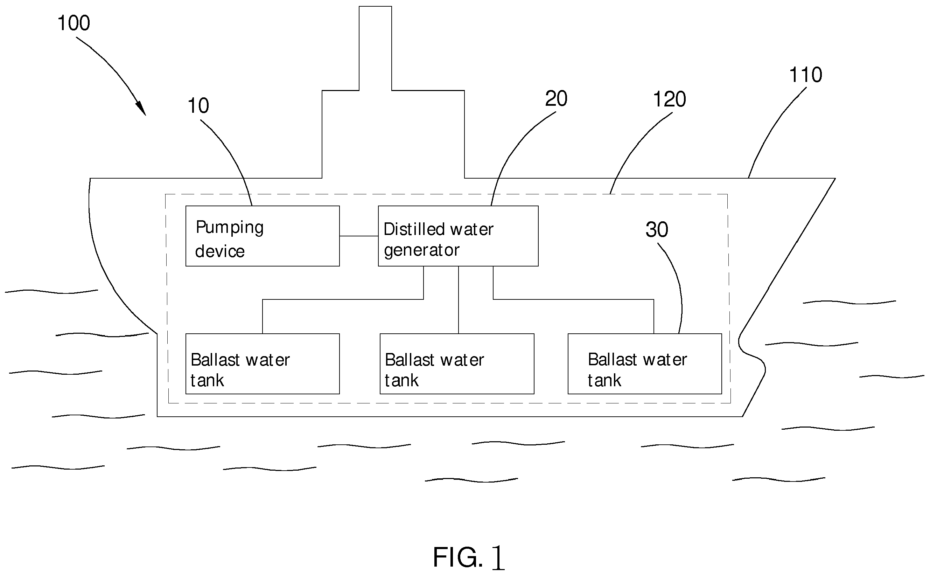

The following illustrative embodiments and drawings are provided to illustrate the disclosure of the present invention, these and other advantages and effects can be clearly understood by persons skilled in the art after reading the disclosure of this specification. As shown in FIG. 1, a vessel 100 of an embodiment according to the present invention includes a ship body 110 and a ballast water generation system 120. The ballast water generation system 120 includes a pumping device 10, a distilled water generator 20 and a ballast water tank 30.

Wherein, the pumping device 10 is disposed on the ship body 110 and is adapted to pump water. For example, the pumping device 10 includes a water pump for pumping water from a sailing area of the vessel 100. Depending on different sailing areas, the pumped water can include river water, lake water or seawater. In this embodiment, the vessel 100 is a marine vessel and the pumping device 10 is adapted to pump seawater for utilization.

The distilled water generator 20 is disposed on the ship body 110 and is connected to the pumping device 10. The distilled water generator 20 is adapted to receive and distill the water pumped by the pumping device 10 to generate distilled water. In one embodiment, a cooling device (not shown) can be disposed between the pumping device 10 and the distilled water generator 20. The cooling device is adapted to cool down the computer host, the mechanical equipment and/or the power system mounted in the ship body 110. For example, the cooling device can include a heat exchanger having plural pipelines connected to the above equipment and the power system. By passing the water pumped from the pumping device 10 through the pipelines to the above equipment and the power system, heat exchange can be conducted through the heat exchanger. Meanwhile, by cooling the above equipment and the power system, the waste heat generated from the above equipment and the power system can be recycled for further utilization. For example, in one embodiment, the cooling device is connected to a fresh-water cooler operated with the power system of the ship body 110. The cooling device can convey the cold seawater pumped from the pumping device to cool down the fresh water contained in the fresh water cooler. That is, through heat exchange between the cooler seawater and the high-temperature fresh water of the fresh-water cooler, and cooling down the power system with the fresh-water cooler, the waste heat generated by the power system can be transferred away. Meanwhile, the seawater pumped by the pumping device 10 is heated up by the waste heat such that the seawater after heating can be provided to the distilled water generator 20. Whereby, the waste heat generated by the vessel can be recycled and utilized again. In addition, the energy consumption of the distilled water generator 20 can be reduced. Wherein, in one embodiment, the power system can be a diesel engine, but it is not limited thereto.

In this embodiment, the distilled water generator 20 includes an evaporation chamber (not shown) and a condensation chamber (not shown). The evaporation chamber is adapted to receive the seawater from the pumping device 10 and to distill the seawater to form steam. The produced steam is passed to the condensation chamber and cooled down to form distilled water.

It is worth to mention that in order to increase the efficiency of evaporating the seawater, in one embodiment, it can pump the evaporation chamber down to a lower pressure so as to keep an inner space of the evaporation chamber as a vacuum or semi-vacuum environment, and to lower the boiling point of the seawater and increase the evaporation rate of the seawater. Wherein, a user can monitor and control the distillation efficiency of the distilled water generator 20 by detecting the vacuum condition in the evaporation chamber to know whether the evaporation process of the seawater is normal or not.

In addition, in one embodiment, the hot seawater obtained from the cooling process of the above equipment and the power system, also can be put into the distilled water generator 20 to proceed distillation. Wherein, to meet an operation temperature limit of the distilled water generator 20, it shall control a temperature of the hot seawater to be not higher than the operation temperature range of the distilled water generator 20. For example, in one embodiment, if an operation temperature range of the distilled water generator 20 is between 50°C and 85 °C, the temperature of the hot seawater before conveying to the distilled water generator 20 shall be controlled to be not above 85 °C so as to maintain the operation stability of the distillation/water generation process thereof. Additionally, if the temperature of the hot seawater in the pipelines is too high, it is possible that part of the hot seawater would evaporate in the pipelines and result in an explosion danger of the pipelines. Hence, in practice, a temperature control to the seawater before conveying it to the distilled water generator 20 is necessary to fulfill the operation stability and the safety of the ballast water generation system.

In one embodiment, for example, the distilled water generator 20 can be a fresh water generator VA-100 of SASAKURA. However, it is not limited thereto. In other embodiments, other types of distilled water generator also can be utilized.

The ballast water tank 30 is disposed in the ship body 110 and is connected to the distilled water generator 20. The distilled water produced by the distilled water generator 20 is supplied into the ballast water tank 30 as ballast water so as to adjust the draft and the stability of the ship body 110. In practice, there can be one or more ballast water tanks 30. For example, in this embodiment, each of the front section, the middle section and the rear section of the ship body 110 is disposed with at least one ballast water tank 30 for receiving the distilled water as the ballast water. However, in other embodiments, it is not limited thereto.

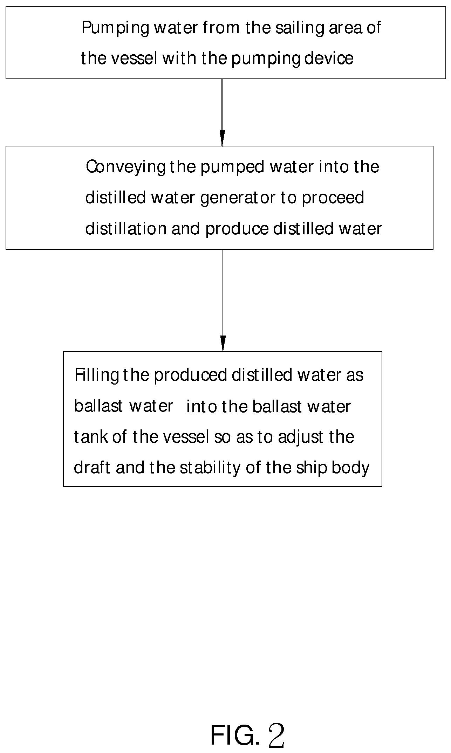

Hereinafter, an operation method of the vessel 100 including the ballast water generation system 120 is described as follows. Referring to FIG. 2, a method of utilizing the ballast water generation system 120 is depicted. First, water is pumped with the pumping device 10. For example, the vessel 100 of this embodiment is a marine vessel which sails in different sea areas. When the vessel 100 sails in a specific sea area, the pumping device 10 can be utilized to pump the seawater from the specific sea area. Besides, if the vessel 100 sails in the rivers, freshwater lakes or saltwater lakes, the water also can be pumped from the available rivers or lakes. In other words, the water being pumped is not limited to seawater, river water or lake water.

Next, the water pumped by the pumping device 10 is conveyed to the distilled water generator 20 to form steam by distillation. In this embodiment, for example, the pumped seawater is utilized to cool down the power system of the vessel through the cooling device mentioned above and is heated up as hot seawater first. Then, the hot seawater is transferred into the distilled water generator 20 and distilled to form distilled water.

Thereafter, the generated distilled water is supplied into each of the ballast water tank 30 through pipelines and used as ballast water of the ballast water tanks 30. Hence, the draft and the stability of the ship body can be adjusted by the utilization of the ballast water of the ballast water tank 30.

It is worth to mention that in order to keep the vessel sail at a preferred efficiency, a quantity of the distilled water produced by the distilled water generator 20 or a quantity of the distilled water supplied into the ballast water tank 30 from the distilled water generator 20 can be controlled. In one embodiment, for example, the quantity of the distilled water generated by the distilled water generator 20 and supplied into the ballast water tank 30 can be adjusted according to a quantity of a fuel consumption of the vessel during its sailing. Wherein, in one embodiment, the above regulating method includes calculating an average fuel consumption of the vessel in advance, and regulating the quantity of distilled water supplied into the ballast water tank 30 according to the average fuel consumption. For example, the quantity of the distilled water supplied from the distilled water generator 20 to the ballast water tank 30 is controlled to be not higher than the fuel consumption of the vessel 100 during a time period. Preferably, a ratio of the quantity of the distilled water supplied into the ballast water tank 30 and the quantity of the fuel consumption of the vessel during the time period is between 1/3 and 1.

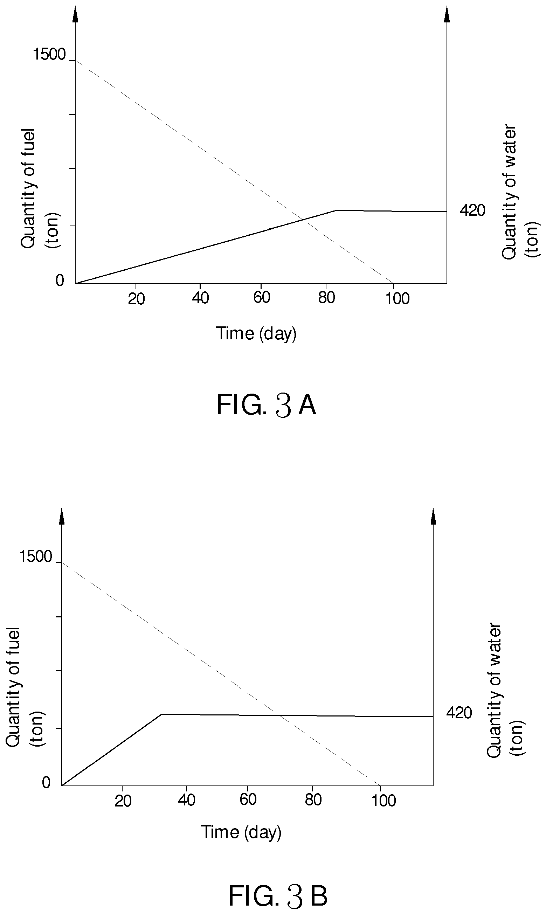

For example, when the fuel tank of the vessel 100 is filled with 1500 tonnes of fuel, wherein a fuel consumption of the vessel 100 is 15 tonnes per day, and a capability of the ballast water tank 30 of the vessel 100 is 420 tonnes of water, it is preferable that a quantity of the distilled water supplied into the ballast water tank 30 is between 5 to 15 tonnes per day, and the redundant distilled water can be discharged from the ship body 110 or used as drinking water on the vessel 100. As shown in FIG. 3A, for example, in one embodiment, the distilled water can be continuously supplied from the distilled water generator 20 into the ballast water tank 30 at a filling rate of 5 tonnes/day. Until the ballast water tank 30 is full, around the 84^{th} day, the distilled water generator 20 can stop producing distilled water. As shown in FIG. 3B, in another embodiment, the distilled water can be continuously supplied from the distilled water generator 20 into the ballast water tank 30 at a filling rate of 15 tonnes/day. Until the ballast water tank 30 is full, around the 28^{th} day, the distilled water generator 20 can stop producing distilled water.

The benefit of setting the ratio of the distilled water quantity supplied into the ballast water tank 30 and the fuel consumption quantity of the vessel 100 during the time period between 1/3 and 1 is that the vessel 100 can be kept sailing with a suitable loading weight, and can obtain a better sailing efficiency. In other words, while the fuel is consuming by the vessel 100 each day, a suitable amount of distilled water is supplied back to the ballast water tank 30, wherein a supplement quantity of the distilled water is preferably not greater than the consumption quantity of the fuel in order to avoid an overloading of the ship body and decreasing of the sailing efficiency. However, in practice, the fuel consumption, the production quantity of the distilled water and the supplying quantity of distilled water are not limited to the above embodiments, and can also be non-quantitative.

The present invention utilizes the distilled water generator to generate distilled water and then supply the distilled water as the ballast water into the ballast water tank such that it is effective to prevent the problem of spreading invasive aquatic creatures, viruses or bacteria in other sea areas through being carried into the ballast water of the ballast water tank. Hence, it can prevent alien species from invading the local environment and destroying the ecology and the food chain thereof. Additionally, as compared with the seawater, utilizing the distilled water as the ballast water is less corrosive and does not damage the frame of the ship body. Therefore, it can extend the service life of the ship body and reduce the maintenance cost thereof. Moreover, since the ballast water is the distilled water, it is basically pure and without impurities and bacteria such that after being discharged from the vessel, it is environmentally friendly and will not damage the local environment.

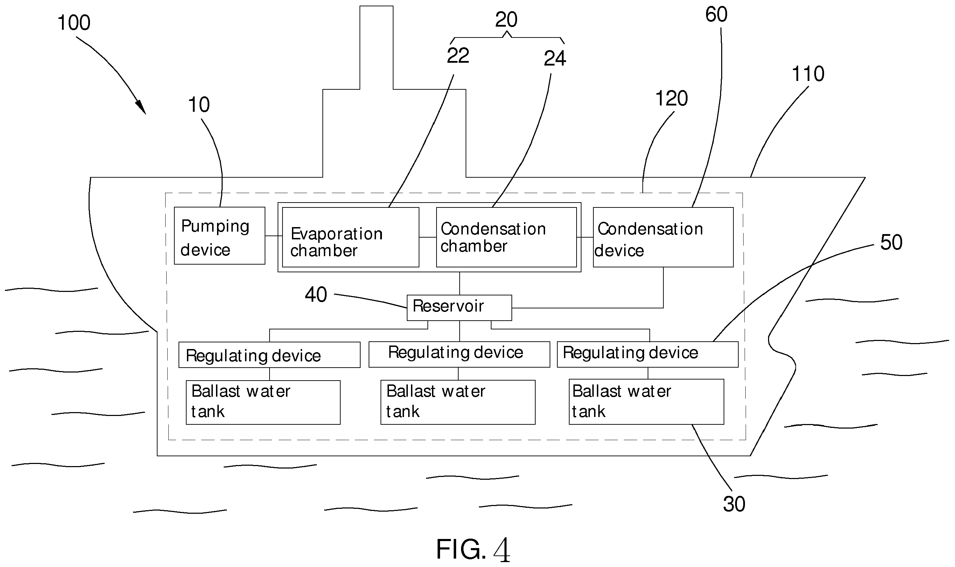

In addition, referring to FIG.4, a ballast water generation system 120 of another embodiment according to the present invention is depicted. The distilled water generator 20 of the ballast water generation system 120 includes an evaporation chamber 22 and a condensation chamber 24. The evaporation chamber 24 is adapted to receive the seawater pumped by the pumping device 10 and to distill the seawater to produce steam. The steam is conveyed into the condensation chamber 24 to be cooled and condensed to form distilled water. The produced distilled water can be temporarily stored into a reservoir 40 and then distributed to each of the ballast water tanks 30. A regulating device 50 can be disposed between the distilled water generator 20 and each of the ballast water tanks 30. The regulating device 50 can be controlled to regulate a quantity of the distilled water supplied from the distilled water generator 20 to the ballast water tanks 30. For example, in one embodiment, the regulating device 60 can include a valve disposed between the reservoir 50 and each of the ballast water tanks 30. The valve is operable to regulate a flow of the distilled water supplied from the reservoir 4 into each of the ballast water tanks 30. Besides, in practice, the regulating device 50 can include one or more detection devices (not shown) which can be adapted to detect the fuel consumption and the production quantity of the distilled water of the distilled water generator 20, etc. Whereby, according to the fuel consumption of the vessel, the regulating device 50 can control the quantity of the distilled water supplied from the distilled water generator 20 to the ballast water tanks 30 in a time period. Preferably, during the time period, the supplied distilled water is not greater than the fuel consumption of the vessel.

Additionally, a condensation device 60 can be configured to connect to the ballast water tanks 30. The condensation device 60 is adapted to collect and condense moisture from the air to form condensed water. The condensed water is then transported to and stored into the ballast water tanks 30. For example, in one embodiment, the condensed water produced by the condensation device 60 can be either conveyed to the reservoir 40 or to another reservoir, and then be distributed as ballast water to any one of the ballast water tanks 30.

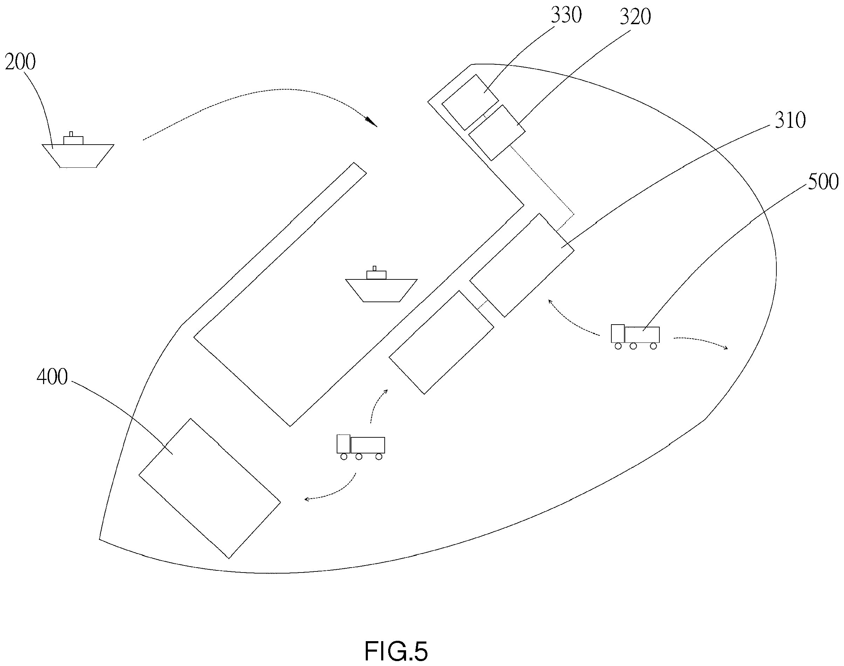

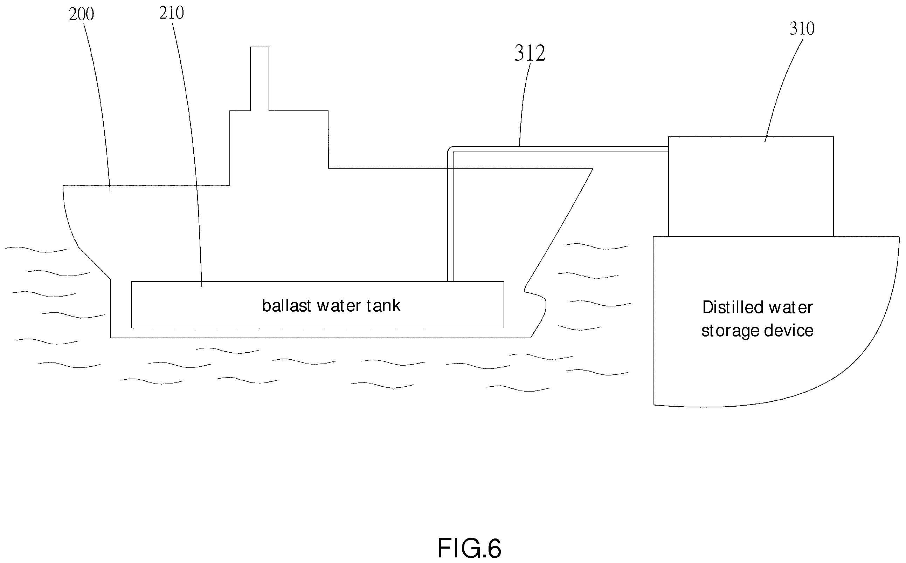

Referring to FIG. 5 and FIG. 6, a facility 300 which is set up at a seashore and adapted for supplying distilled water as ballast water to a vessel 200 is illustrated, wherein the vessel 200 includes a ship body and a ballast water tank 210. The facility 300 includes a distilled water storage device 310 which is adapted to store distilled water to be supplied to the ballast water tank 210 as ballast water, and thereby to adjust a draft and stability of the ship body. In one embodiment, the facility 300 further includes a distilled water pipeline system 312 which communicates the distilled water storage device 310 and the ballast water tank 210. In one situation, the distilled water pipeline system 312 is adapted to transport the distilled water stored in the distilled water storage device 310 to the ballast water tank 210 of the vessel 200 such that the ballast water tank 210 could carry a required quantity of ballast water. In another situation, the distilled water pipeline system 312 is adapted to transport the distilled water stored in ballast water tank 210 to the distilled water storage device 310 so as to unload the ballast water of the ballast water tank 210. It is worth mentioning that in order to avoid the distilled water being polluted, the distilled water pipeline system 312 is preferably an independent pipeline system which is only utilized to transport distilled water. For instance, in one embodiment, the pipeline system for pumping seawater and the distilled water pipeline system are operated independently from each other, both of which are not interchangeable in use, thereby ensuring the quality and purity of the distilled water.

Wherein, in one embodiment, the distilled water storage device 310 includes one to plural water towers or water barrels to store the distilled water, however, it is not limited thereto.

In addition, it is preferable that the facility of this embodiment is set up near to the port area, whereby the ballast water stored in the distilled water storage device 310 could be supplied to the vessel 200 as the ballast water of the ballast water tank 210 when the vessel 200 enters the port.

The business model of the facility of the present invention includes the following examples, but are not limited thereto. In one situation, when the vessel 200 loaded with goods enters the port and unloads the goods, it is usually necessary for the vessel 200 to carry suitable quantity of ballast water to the ballast water tank 210 before the vessel 200 leaves the port so as to ensure the draft and stability of the vessel 200 while sailing. Therefore, the business operator of the vessel 200 could trade with the business operator of the facility to have the distilled water stored in the distilled water storage device 310 be filled into the ballast water tank 210 of the vessel 200 as the ballast water. Besides, in another situation, when the vessel 20 which is empty enters the port, since the vessel 200 is usually loaded with ballast water, the business operator of the vessel 200 could choose to trade the ballast water stored in the ballast water tank 210 with the business operator of the facility, wherein the ballast water could also be transported to and stored into the distilled water storage device 310 when the ballast water is distilled water such that the ballast water could be utilized by other vessels 200 again. In this way, a virtuous cycle of reuse of the distilled water as the ballast water could be achieved, and the business operators of the vessel 200 and the facility could enjoy mutual benefits and fulfill their needs.

It is worth mentioning that the facility set up at the port area or the seashore could provide the distilled water stored in the distilled water storage device 310 not only for the vessels which enter or leave the port, but also for other applications. For instance, in some areas where water needs to be used, or in arid areas where water resources are difficult to obtain, distilled water may be supplied from the distilled water storage device 310 to the above-mentioned areas so that the desert can also be transformed into an oasis.

Furthermore, it is worth mentioning that a supply source of the distilled water stored in the above-mentioned distilled water storage device 310 could be, but is not limited to: (1) the ballast water unloaded from the ballast water tank 210 of the vessel 200 which enters the port; (2) distilled water generated by plants 400, i.e., including but not limited to steel factories, petrochemical plants, ceramics factories, paper mills, or incinerators, etc., via technologies such as waste heat recovery; (3) distilled water generated at a remote area and transported by the pipelines or transporting vehicles 500; (4) distilled water obtained by evaporating water with one or plural distilled water generator 320 built at the seashore, wherein the water could be transported by pipelines or transporting vehicles, or pumped from a water area by a pumping device and then transported to the distilled water generator 320 to proceed the evaporation process for the distilled water, wherein the above-mentioned water area could be coastal sea area or water reservoirs, but it is not limited thereto. In addition, the above-mentioned facility is not necessary to be set up at the seashore areas or near to the port areas, the distilled water storage device 310 also could be set up near to the location where the distilled water is produced, such as being close to the above-mentioned plants 400, wherein the plants 400 are also not limited to be set up near to the port areas.

It must be pointed out that the embodiments described above are only some embodiments of the present invention. Depending on different sailing areas, the vessel of the present invention includes marine vessels, such as ocean vessels, cross-channel vessels, coastal vessels, arctic vessels, harbor ships, and mainland river vessels, etc. Similarly, according to different application categories, the vessel of the present invention includes transport ships, engineering ships, working crafts, and fishery vessels, etc. However, it is not limited thereto. All equivalent structures which employ the concepts disclosed in this specification and the appended claims should fall within the scope of the present invention.

## Claims

1. A vessel (100), comprising:
a ship body (110); and
a ballast water tank (30), disposed in the ship body (110), being adapted to receive distilled water as ballast water to adjust a draft and stability of the ship body (110).

2. The vessel (100) of claim 1, further comprising:
a pumping device (10) disposed in the ship body (110) and adapted to pump water from a sailing area of the vessel (100); and
a distilled water generator (20), disposed in the ship body (110) and connected with the pumping device (10), being adapted to receive the water pumped by the pumping device (10) and distill the water to form distilled water.

3. The vessel (100) of claim 2, further comprising a cooling device connected with the pumping device (10) and the distilled water generator (20), wherein the cooling device is connected to a power system of the ship body (110) and to cool down the power system by utilizing the water pumped by the pumping device (10), and convey the water heated up by the cooling process to the distilled water generator (20).

4. The vessel (100) of claim 2, further comprising a regulating device (50) connected between the distilled water generator (20) and the ballast water tank (30), wherein the regulating device (50) is adapted to control a quantity of the distilled water supplied from the distilled water generator (20) to the ballast water tank (30) to be not greater than a quantity of a fuel consumption of the vessel (100) in a time period.

5. The vessel (100) of claim 4, wherein a ratio of the quantity of the distilled water supplied from the distilled water generator (20) to the ballast water tank (30) and the quantity of the fuel consumption of the vessel (100) during the time period is between 1/3 and 1.

6. The vessel (100) of claim 2, further comprising a condensation device (60) connected with the ballast water tank (30), wherein the condensation device (60) is adapted to collect and condense moisture from air to form condensed water, and to convey the condensed water to the ballast water tank (30).
